# EUROPÄISCHE PATENTANMELDUNG

(11) **EP 0 639 867 A1**
(43) Veröffentlichungstag der Anmeldung: **22.02.1995**
(21) Anmeldenummer: 94108020.2
(22) Anmeldetag: 25.05.1994
(51) Int. Cl.: H01M 10/50

(54) **Akkumulatorenbatterie**

(30) Priorität: 14.08.1993 DE 4327391
(71) Anmelder: VARTA Batterie Aktiengesellschaft, D-30419 Hannover (DE)
(72) Erfinder: Dennstedt, Welf, Dr., D-65779 Kelheim (DE); Niggemann, Eberhard, Dr., D-65779 Kelkheim (DE); Köhler, Uwe, Dr., D-65779 Kelkheim (DE)
(74) Vertreter: Kaiser, Dieter Ralf, Dipl.-Ing.

(57) **Zusammenfassung**

Bei einer Akkumulatorenbatterie, insbesondere Antriebsbatterie für Elektrostraßenfahrzeuge, mit mehreren Zellen, die reihenweise und mit Abständen zwischen ihren Gehäusen in einem Batterietrog angeordnet sind, kehrt eine Kühlvorrichtung den Strom eines Kühlmediums (Luft) abwechselnd von einer Richtung in die Gegenrichtung um, womit sich jeweils auch die Rangfolge, in der die Zellen mit frischer oder mit bereits vorgewärmter Luft beaufschlagt werden, umkehrt. Dadurch wird ein bei gleichbleibender Richtung des Kühlstromes unvermeidliches Temperaturgefälle zwischen den Zellen, das zu Betriebsstörungen Anlaß geben kann, weitgehend egalisiert. Eine mögliche Vorrichtung zur Umkehrkühlung ist ein um 180° schwenkbarer Ventilator (1) in einem zum Batterietrog (5) führenden Rohrstutzen (4).

## Beschreibung

Die Erfindung betrifft eine Akkumulatorenbatterie mit mehreren Zellen, die in einem gemeinsamen Behälter baulich reihenweise hintereinander angeordnet sind, wobei die Zellen zwischen sich spaltförmige Abstände aufweisen, so daß ihre Gehäuse von einem Kühlmedium umströmbar sind.

Beim Betrieb von Akkumulatorenzellen, die im Batterieverbund arbeiten und die in einem gemeinsamen Batterietrog untergebracht sind, kann die unvermeidbare Verlustwärme zu einer erheblichen Aufheizung des Systems führen. Es können dabei Temperaturwerte erreicht werden, die eine Beschädigung der Zellenbauteile, gebenenfalls auch der aktiven Materialien nach sich ziehen, zumindest aber merkliche Veränderungen des elektrischen Verhaltens der Zellen auslösen können. Aus diesem Grunde ist die Kühlung eines solchen Aggregats unerläßlich.

Es treten besonders dann Unstimmigkeiten im Zusammenspiel der Zellen - bei größeren Batterieverbänden entsprechend auch der Module - auf, wenn deren Kühlung nicht gleichmäßig erfolgt. Wegen der Temperaturabhängigkeit der Stromaufnahme und -abgabe nehmen ungleichmäßig gekühlte Zellen unterschiedlich große Kapazitäten auf und beenden insofern nicht alle zum gleichen Zeitpunkt die Entladung.

Bei den in einem großen Behälter oder Batterietrog untergebrachten Zellen,wie es insbesondere bei Antriebsbatterien für Elektrostraßenfahrzeuge der Fall ist, erfolgt die Kühlung nur in untergeordnetem Maße durch Wärmestrahlung; vielmehr müssen die Zellen durch erzwungene Konvektion mittels eines Luftstromes gekühlt werden. Damit Luft an die einzelnen Zellen herangeführt werden kann, werden diese im Behälter mit Abstand voneinander montiert. Dabei müssen Form und Ausstattung des Behälters, Eintritts- und Austrittsöffnungen für die Kühlluft und die vorhandenen Ventilatoren den Anforderungen an die Kühlleistung entsprechen.

Bei den meisten bekannten Kühleinrichtungen, die für einen größeren Zellenverband ausgelegt sind, mangelt es jedoch an einer gleichmäßigen Kühlleistung für die einzelnen Zellen. Die Ursache ist folgende: Üblicherweise wird die Kühlluft an einer größeren Reihe von Zellen entlanggeführt, wobei die in der Reihenfolge vorn liegenden Zellen mit frischer, die nachgeordneten Zellen mit bereits erwärmter Kühlluft in Kontakt kommen. Dementsprechend ist auch die Durchschnittstemperatur bei den in der Reihenfolge vorn liegenden Zellen niedriger als bei den nachgeordneten.

Die Kühlleistung ist also, entsprechend der Anordnung der Zelle im Luftstrom, gestaffelt. Die Staffelung der Kühlleistung fällt um so linearer aus, je exakter die Kühlluft von Zelle zu Zelle geführt wird. Gleiches gilt für die Staffelung der sich an den Zellen einstellenden Durchschnittstemperaturen.

Wie z.B. aus der DE-OS 4029018 bekannt, läßt sich durch Verzweigung der Kühlluftströme die Ungleichmäßigkeit der Kühlwirkung an den einzelnen Zellen verringern; sie läßt sich aber nicht ausschließen, solange das Prinzip der Kühlung, nämlich die Anströmung mehrerer Zellen mit Kühlluft in einer bestimmten Reihenfolge, nicht beseitigt wird.

An diesem Prinzip wird auch bei den verschiedenen Maßnahmen zur Wärmeabfuhr aus einer Hochenergiebatterie gemäß DE-OS 40 29 901 festgehalten.

Nach einem anderen, aus der DE-PS 41 16 253 bekannten Kühlverfahren wird durch einen treppenförmigen Aufbau der Zellen der Luftstrom so verzweigt, daß jede Zelle mit einem Teilstrom frischer Kühlluft versorgt wird. Da an jedem Luftkanal der gleiche Strömungswiderstand herrscht, fließen an allen Zellen gleiche Volumenströme, und es liegen gleiche Kühlbedingungen vor.

Diese Konstruktion erfordert jedoch große Luftkanäle. Das damit verbundene große Volumen der Zelle ist für manche Anwendungszwecke nicht akzeptabel, weil dadurch der volumenbezogene Energieinhalt einer Batterie (Wh/l) stark verkleinert wird. Ferner ist bei dieser Konstruktion der notwendige Luftvolumenstrom zum Erreichen der gewünschten Kühlwirkung relativ groß.

Der Erfindung liegt die Aufgabe zugrunde, bei Kühlung von Akkumulatorenzellen, die in Serie in einem Kühlstrom liegen, eine verbesserte Egalisierung der Kühlung zu erreichen.

Die Aufgabe wird erfindungsgemäß mit einer Akkumulatorenbatterie gelöst, wie sie im Patentanspruch 1 definiert ist.

Die erfindungsgemäße Batterie, insbesondere eine Nickel/Metallhydrid-Batterie, verfügt danach über eine Kühlmittelquelle, welche das Kühlmittel entlang der Zellenreihe in zeitlichem Wechsel abwechselnd in die eine und in die entgegengesetzte Richtung strömen läßt. Bei einer solchen "Umkehrkühlung" werden abwechseld zwei Kühlphasen 1 und 2 mit entgegengesetzter Strömungsrichtung eingestellt.

Mit der Umkehrung des Kühlmittelstromes in der Kühlphase 2 kehrt sich für die Zellen die Reihenfolge um, mit der sie von dem Kühlmedium angeströmt werden, und mit ihr auch der Betrag der Kühlleistung.

Als Kühlmedien sind, da sie nur mit den dicht verschlossenen Gehäusen der Zellen in Kontakt kommen, Flüssigkeiten wie Wasser, Öl oder Glykol geeignet. Bevorzugtes Kühlmittel ist jedoch Luft, und die bevorzugte Kühlmittelquelle ein Ventilator mit der Eigenschaft, den kühlenden Luftstrom in definierten Zeitintervallen umzukehren.

Für die Anbringung des Ventilators oder Lüfters an der Akkumulatorenbatterie bietet sich vorzugsweise ein an den Batteriebehälter angeschlossener Kühlmittelkanal an.

Hinsichtlich der Stromversorgung des Ventilators ist es besonders günstig, ihn der zu kühlenden Batterie zuzuordnen. Wegen des dort zur Verfügung stehenden Gleichstroms wird man einen Ventilator mit Gleichstrommotor vorsehen.

Es ist aber auch möglich, den Ventilator -gegebenenfalls auch mehrere- elektrisch dem Ladegerät zuzuordnen. Da an diesem Drehstrom oder Wechselstrom und Gleichstrom zur Verfügung stehen, kann der Motor des Ventilators nach anderen Auswahlkriterien (z.B. Drehzahlregulierung, Herstellungs- und Betriebskosten) zu einer der Stromarten passend ausgesucht werden.

Anhand Figuren wird die Erfindung näher beschrieben.

Figur 1 zeigt einen für die Umkehrkühlung geeigneten Axiallüfter.

Figur 2 zeigt einen für die Umkehrkühlung geeigneten Querstromlüfter.

Figur 3 zeigt Temperaturverteilungen bei reihenweise angeordneten Akkumulatorenzellen unter dem Einfluß eines auf übliche Weise und eines erfindungsgemäß geführten Kühlstromes.

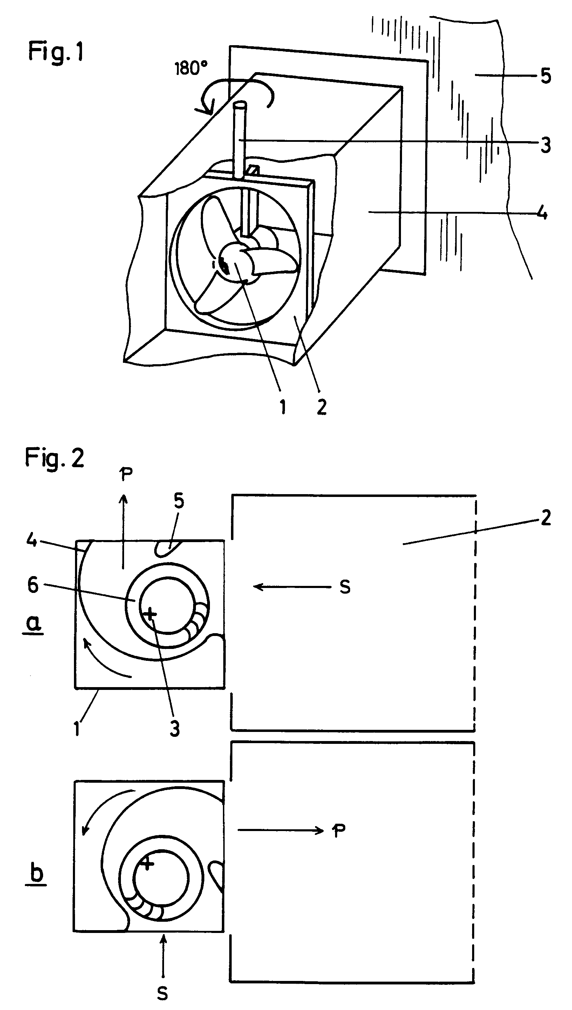

Gemäß Figur 1 ist ein Axiallüfter oder -ventilator 1, dessen Rotor nur eine Förderrichtung aufzuweisen braucht, auf eine quadratische Wandplatte 2 montiert, die eine Achse 3 enthält, welche senkrecht zur Förderrichtung des Lüfters ausgerichtet ist.

Die Wandplatte ist in einen passenden Rohrstutzen 4, welcher an die Wand eines Batteriegehäuses 5 angeflanscht ist, so eingesetzt, daß sie den Querschnitt des Rohrstutzens ausfüllt und um die genannte Achse schwenkbar ist.

Durch Schwenken der Achse um 180° wird auch der Lüfter in der Weise umgedreht, daß bei Lüfterbetrieb die Richtung des zu fördernden Luftstromes in die Gegenrichtung umgekehrt wird. Saugraum und Stauraum im Rohrstutzen werden vertauscht.

Die Schwenkung der Achse um 180° kann durch einen separaten Stellmotor mit Gestänge, Kettenzug und Zahnrad erfolgen.

Bei einer anderen günstigen Ausführungsform der Umkehrkühlung gemäß Fig.2 ist ein Querstromlüfter 1 vor einer Wandöffnung des Batterietroges 2 so angeordnet, daß das Lüftergehäuse einschließlich der Luftleitbleche 4 und 5 um seine Mittelachse 3 geschwenkt werden kann.

In der Fig.2 dargestellt sind zwei Positionen a und b des Querstromlüfters, welche jeweils durch eine 90°-Drehung ineinander übergehen. In Position a erzeugt die Lüfterwalze 6 im Innern des Batterietroges einen Sog s, außen hingegen einen Druck p.

Zur Umkehrung der Kühlluftströmung, also zum Wechsel von Saug- auf Blasbetrieb, wird das Lüftungsgehäuse in die Position b gebracht. Die Lüfterwalze, deren Drehrichtung unverändert bleibt, erzeugt nun außen einen Sog s und im Troginnern einen Druck p.

Eine weitere Kühlvorrichtung gemäß der Erfindung könnte aus zwei nebeneinander in die Wand des Batteriegehäuses eingebauten Axiallüftern mit Stellklappen und für jeweils nur eine Förderrichtung bestehen. Auf der gegenüberliegenden Seite des Gehäuses befindet sich eine Eintritts- bzw. Austrittsöffnung. Beide Lüfter sind abwechselnd in Tätigkeit, wobei der eine Lüfter Kühlluft in das Gehäuse hineinfördert und der andere sie aus dem Gehäuse hinausbläst. Der jeweils aktive Lüfter hat geöffnete, der inaktive geschlossene Stellklappen.

In einer Abwandlung dieser Ausführung liegen sich zwei Axiallüfter für jeweils nur eine Förderrichtung in der Wand des Batteriegehäuses gegenüber. Beide Lüfter sind, bezogen auf das Gehäuse, entweder auf Druckbetrieb oder auf Saugbetrieb eingerichtet und abwechselnd in Tätigkeit, wodurch die Umkehrkühlung bewirkt wird.

Im Rahmen der Erfindung läge schließlich auch ein fest in das Batteriegehäuse eingebauter Axiallüfter, der mit einem Gleichstrom- oder einem Drehstrommotor ausgerüstet ist, welcher je nach Richtung des Gleichstromes oder nach dem Drehsinn des Drehstromfeldes linksdrehend oder rechtsdrehend läuft und im gleichen Sinne den Propellerrotor des Lüfters antreibt. Vor jedem Richtungswechsel zur Einstellung der Umkehrkühlung wird der Strom zur Schonung des Geräts kurzzeitig abgeschaltet.

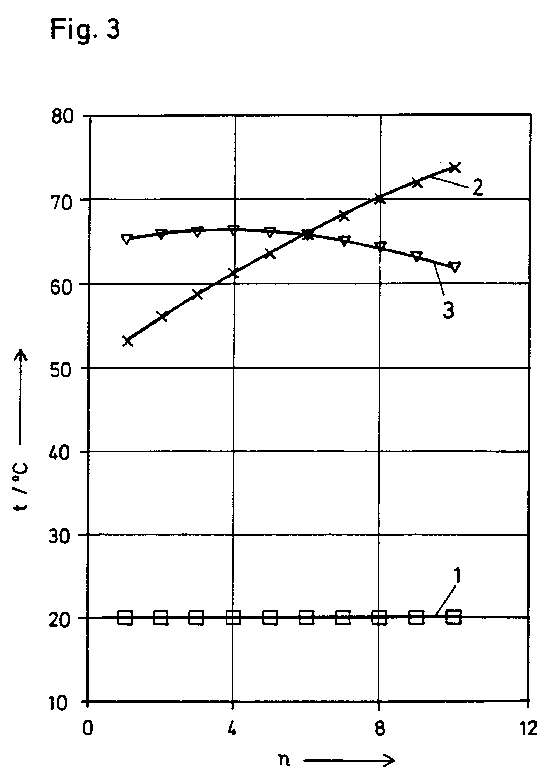

Der Kühleffekt bei der erfindungsgemäßen Umkehrkühlung wird durch Fig. 3 augenfällig. Hierzu stellt man sich 10 Akkumulatorenzellen vor, die in einem Batterietrog hintereinander in einer Reihe angeordnet sind und einer Überladebehandlung unterworfen werden.

Zu Beginn der Ladung (Überladung) haben alle Zellen die gleiche Ausgangstemperatur, was durch die horizontal liegende Gerade 1 zum Ausdruck kommt.

Die Temperatur der Zellen steigt infolge der Stromwärme naturgemäß über die Zeit hinweg an, wobei die Kühlung der Zellen dem Temperaturanstieg entgegenwirkt, so daß sich aus dem Zusammenspiel von Wärmezufuhr und -abfuhr für jede einzelne Zelle, und zwar für jedes Zeitintervall, eine individuelle Temperatur einstellt.

Bei der bisherigen Ausführung der Kühlung, mit einem aus nur einer Richtung herangeführten Luftstrom, dessen Kühlwirkung entsprechend der Rangfolge der Zelle mit zunehmender Lufttemperatur sinkt, ergibt sich für die Temperatur der Zellen nach Ablauf mehrerer Zeitintervalle die Kurve 2, die das zwischen den Zellen herrschende Temperaturgefälle beschreibt.

Bei Durchführung der Umkehrkühlung, bei der in jedem der betrachteten Zeitintervalle die Strömungsrichtung des Kühlstromes umgekehrt wird, so daß z.B. in den Intervallen 1, 3, 5 usw. die Kühlluft in die eine Richtung, in den Intervallen 2, 4, 6 usw. in die entgegengesetzte Richtung strömt, ergibt sich nach Ablauf der gleichen Anzahl von Zeitintervallen ein Temperaturverlauf nach Kurve 3.

Beide Kurven ergeben sich aus der Vorgabe ansonsten gleicher Parameter. Der Vergleich der Kurven 2 und 3 zeigt für das Beispiel der konventionellen Kühlung eine Temperaturdifferenz zwischen der am besten und der am schlechtesten gekühlten Zelle von ca. 20 ^{o}C, für das Beispiel der erfindungsgemäßen Umkehrkühlung dagegen eine Differenz von nur ca. 5 ^{o}C. - Die Mittelwerte für die Temperaturen der konventionell gekühlten und die Temperaturen der nach der erfindungsgemäßen Umkehrkühlung gekühlten Zellen betragen ca. 65 ^{o}C und weichen vom Mittelwert nur geringfügig ab.

Es ergibt sich also durch Anwendung der Umkehrkühlung eine weitgehende Temperaturangleichung der Zellen auf annähernd dem gleichen Temperaturniveau.

Der Vorteil eines Akkumulatorbetriebes mit erfindungsgemäßer Umkehrkühlung besteht nicht so sehr in einer effizienten Kühlung an sich, sondern in einer sehr weitgehenden Egalisierung der Zelltemperaturen innerhalb eines vielzelligen Batterieaggregats, welche unerläßlich ist, um auf große Temperaturunterschiede zurückführbare Beschädigungen und Funktionsstörungen -dazu gehören auch Umpolungen- zu vermeiden.

## Patentansprüche

1. Akkumulatorenbatterie mit mehreren Zellen, die in einem gemeinsamen Behälter baulich reihenweise hintereineinander angeordnet sind, wobei die Zellen zwischen sich spaltförmige Abstände aufweisen, so daß ihre Gehäuse von einem Kühlmedium umströmbar sind, dadurch gekennzeichnet, daß die Batterie an eine Kühlmittelquelle angeschlossen ist, bei der die Strömungsrichtung des Kühlmittels entlang der Zellenreihe in zeitlichen Intervallen umkehrbar ist.

2. Akkumulatorenbatterie nach Anspruch 1, dadurch gekennzeichnet, daß das Kühlmittel Luft ist.

3. Akkumulatorenbatterie nach Anspruch 2, dadurch gekennzeichnet, daß die Kühlmittelquelle ein um seine vertikale Achse schwenkbarer oder ein sowohl mit links- als auch mit rechtsdrehendem Propellerrotor betreibbarer, im Kühlmittelkanal angeordneter Ventilator ist.

4. Akkumulatorenbatterie nach Anspruch 2, dadurch gekennzeichnet, daß die Kühlmittelquelle ein im Kühlmittelkanal des Batteriegehäuses schwenkbar angeordneter Querstromlüfter ist.

5. Akkumulatorenbatterie nach einem der Ansprüche 1 bis 4, dadurch gekennzeichnet, daß die Kühlmittelquelle vor einer Öffnung im Batteriegehäuse angeordnet ist.
